Europäisches Patentamt

European Patent Office

Office européen des brevets

(19)

(11) EP 0 967 012 A1

(12) DEMANDE DE BREVET EUROPEEN

(43) Date de publication:
29.12.1999 Bulletin 1999/52

(51) Int Cl.$^6$: **B01J 29/16**, C10G 47/20

(21) Numéro de dépôt: 99401513.9

(22) Date de dépôt: 18.06.1999

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: 25.06.1998 FR 9808050

(71) Demandeur: INSTITUT FRANCAIS DU PETROLE
92500 Rueil Malmaison (FR)

(72) Inventeurs:
• Kasztelan, Slavik
  92500 Rueil Malmaison (FR)
• Benazzi, Eric
  78400 Chatou (FR)
• Marchal-George, Nathalie
  69230 Saint Genis Laval (FR)

(54) **Catalyseur d'hydrocraquage comprenant une zéolithe Y non globalement désaluminée, un élément du groupe VB et un élément promoteur**

(57) L'invention concerne un catalyseur d'hydrocraquage comprenant au moins une matrice amorphe ou mal cristallisée de type oxyde, au moins un élément du groupe VB, de préférence le niobium, et au moins une zéolithe Y non globalement désaluminée, au moins un élément promoteur choisi dans le groupe formé par le bore, le phosphore et le silicium, éventuellement au moins un élément choisi parmi les éléments du groupe VIB et du groupe VIII, éventuellement au moins un élément du groupe VIIA. L'invention concerne également l'utilisation de ce catalyseur en hydrocraquage des charges hydrocarbonées.

EP 0 967 012 A1

Printed by Jouve, 75001 PARIS (FR)

**Description**

La présente invention concerne un catalyseur d'hydrocraquage de charges hydrocarbonées, ledit catalyseur comprenant au moins une matrice amorphe ou mal cristallisée de type oxyde, au moins un élément (métal) du groupe VB (groupe 5 selon la nouvelle notation de la classification périodique des éléments : Handbook of Chemistry and Physics, 76ième édition, 1995-1996, intérieur première page de couverture) de préférence le niobium, au moins une zéolithe Y, non globalement désaluminée, au moins un élément promoteur choisi dans le groupe constitué par le bore, le phosphore et le silicium, éventuellement au moins un élément (métal) choisi parmi le groupe VIB et/ou le groupe VIII (groupe 6 et groupes 8, 9 et 10 selon la nouvelle notation de la classification périodique des éléments), de préférence le molybdène et le tungstène, le cobalt, le nickel et le fer. Le catalyseur renferme également éventuellement au moins un élément du groupe VIIA (groupe des halogènes, groupe 17 selon la nouvelle notation de la classification périodique des éléments), tel que par exemple le fluor.

La présente invention concerne également les procédés de préparation dudit catalyseur, ainsi que son utilisation pour l'hydrocraquage de charges hydrocarbonées telles que les coupes pétrolières, les coupes issues du charbon contenant des composés aromatiques, et/ou oléfiniques, et/ou naphténiques, et/ou paraffiniques, les dites charges contenant éventuellement des métaux, et/ou de l'azote, et/ou de l'oxygène et/ou du soufre.

L'hydrocraquage de coupes pétrolières lourdes est un procédé très important du raffinage qui permet de produire, à partir de charges lourdes excédentaires et peu valorisables, les fractions plus légères telles que essences, carburéacteurs et gazoles légers que recherche le raffineur pour adapter sa production à la structure de la demande. Certains procédés d'hydrocraquage permettent d'obtenir également un résidu fortement purifié pouvant constituer d'excellente bases pour huiles. Par rapport au craquage catalytique, l'intérêt de l'hydrocraquage catalytique est de fournir des distillats moyens, carburéacteurs et gazoles, de très bonne qualité. L'essence produite présente un indice d'octane beaucoup plus faible que celle issue du craquage catalytique.

Les catalyseurs utilisés en hydrocraquage sont tous du type bifonctionnel associant une fonction acide à une fonction hydrogénante. La fonction acide est apportée par des supports de grandes surfaces (150 à 800 m$^2$.g$^{-1}$ généralement) présentant une acidité superficielle, telles que les alumines halogénées (chlorées ou fluorées notamment), les combinaisons d'oxydes de bore et d'aluminium, les silice-alumines amorphes et les argiles. La fonction hydrogénante est apportée soit par un ou plusieurs métaux du groupe VIII de la classification périodique des éléments, tels que fer, cobalt, nickel, ruthénium, rhodium, palladium, osmium, iridium et platine, soit par une association d'au moins un métal du groupe VI de la classification périodique tels que molybdène et tungstène et au moins un métal du groupe VIII.

L'équilibre entre les deux fonctions acide et hydrogénante est le paramètre fondamental qui régit l'activité et la sélectivité du catalyseur. Une fonction acide faible et une fonction hydrogénante forte donnent des catalyseurs peu actifs. travaillant à température en général élevée (supérieure ou égale à 390 °C), et à vitesse spatiale d'alimentation faible (la VVH exprimée en volume de charge à traiter par unité de volume de catalyseur et par heure est généralement inférieure ou égale à 2) mais dotés d'une très bonne sélectivité en distillats moyens. Inversement, une fonction acide forte et une fonction hydrogénante faible donnent des catalyseurs actifs mais présentant de moins bonnes sélectivités en distillats moyens. La recherche d'un catalyseur convenable sera donc centrée sur un choix judicieux de chacune des fonctions pour ajuster le couple activité/sélectivité du catalyseur.

Ainsi, c'est un des grands intérêts de l'hydrocraquage de présenter une grande flexibilité à divers niveaux : flexibilité au niveau des catalyseurs utilisés, qui amène une flexibilité des charges à traiter et au niveau des produits obtenus. Un paramètre aisé à maîtriser est l'acidité du support du catalyseur.

Les catalyseurs conventionnels de l'hydrocraquage catalytique sont, pour leur grande majorité, constitués de supports faiblement acides, tels les silice-alumines amorphes par exemple. Ces systèmes sont plus particulièrement utilisés pour produire des distillats moyens de très bonne qualité, et encore, lorsque leur acidité est très faible, des bases huiles.

Dans les supports peu acides, on trouve la famille des silice-alumines amorphes. Beaucoup de catalyseurs du marché de l'hydrocraquage sont à base de silice-alumine associée, soit à un métal du groupe VIII soit, de préférence quand les teneurs en poisons hétéroatomiques de la charge à traiter dépassent 0,5 % en poids, à une association de sulfures des métaux des groupes VIB et VIII. Ces systèmes ont une très bonne sélectivité en distillats moyens. et les produits formés sont de bonne qualité. Ces catalyseurs, pour les moins acides d'entre eux, peuvent également produire des bases lubrifiantes. L'inconvénient de tous ces systèmes catalytiques à base de support amorphe est, comme on l'a dit, leur faible activité.

D'autre part, des sulfures simples d'éléments du groupe VB ont été décrits en tant que constituants de catalyseurs d'hydroraffinage de charges hydrocarbonées, comme par exemple le trisulfure de niobium dans le brevet US-A-5.294.333. Des mélanges de sulfures simples comprenant au moins un élément du groupe VB et un élément du groupe VIB ont également été testés comme constituants de catalyseurs d'hydroraffinage de charges hydrocarbonées, comme par exemple dans le brevet US-A-4.910.181 ou le brevet US-A-5.275.994.

Les travaux de recherche effectués par le demandeur sur les zéolithes et sur les phases actives hydrogénantes, l'ont conduit à découvrir que, de façon surprenante, un catalyseur d'hydrocraquage de charges hydrocarbonées comprenant au moins une matrice amorphe ou mal cristallisée généralement poreuse telle que l'alumine, au moins un élément du groupe VB de la classification périodique des éléments, tels que le tantale, le niobium et le vanadium, de préférence le niobium, au moins une zéolithe Y, non globalement désaluminée, présentant un paramètre de maille (ou paramètre cristallin) supérieur à 2,438 nm, de préférence supérieur à 2,442 nm, et de manière très préférée supérieur à 2,455 nm, et un rapport SiO2/Al2O3 global inférieur à 8, de préférence inférieur à 7,5, de manière très préférée inférieur à 7, au moins un élément promoteur choisi dans le groupe constitué par le bore, le phosphore et le silicium.

Le catalyseur comprend également éventuellement au moins un élément du groupe VIB de ladite classification, tels que le chrome, le molybdène et le tungstène, de préférence le molybdène ou le tungstène, de façon encore plus préférée le molybdène, éventuellement un élément du groupe VIII, c'est-à-dire un élément choisi dans le groupe constitué par: Fe, Ru, Os, Co, Rh, Ir, Ni, Pd, Pt, de préférence le fer, le cobalt, le nickel ou le ruthénium, éventuellement un élément du groupe VIIA, de préférence le fluor.

Ledit catalyseur présente une activité en hydrocraquage plus importante que celles des formules catalytiques à base d'élément du groupe VIB connues de l'art antérieur.

Le catalyseur de la présente invention renferme généralement en % poids par rapport à la masse totale du catalyseur :

- 0,1 à 99,8%, de préférence de 0,1 à 90%, de manière encore plus préférée de 0,1 à 80%, et de manière très préférée 0,1 à 70% d'au moins une zéolithe Y, non globalement désaluminée, dont le paramètre de maille est supérieur à 2,438 nm, de préférence supérieur à 2,442 nm, et de manière très préférée supérieur à 2,455 nm, et un rapport SiO2/Al2O3 global inférieur à 8, de préférence inférieur à 7,5, de manière très préférée inférieur à 7.
- 0,1 à 60%, de préférence de 0,1 à 50%, et de manière encore plus préférée de 0,1 à 40%, d'au moins un élément choisi dans le groupe VB,
- 0,1 à 99%, de préférence de 1 à 99 % d'au moins une matrice minérale poreuse amorphe ou mal cristallisée de type oxyde
- 0,1 à 20%, de préférence de 0,1 à 15% et de manière encore plus préférée de 0,1 à 10% d'au moins un élément promoteur choisi dans le groupe constitué par le bore, le phosphore, et le silicium, non compris le silicium éventuellement contenu dans la zéolithe,

le catalyseur pouvant renfermer en outre :

- de 0 à 60%, de préférence de 0,1 à 50% et de manière encore plus préférée de 0,1 à 40% d'au moins un élément choisi parmi les éléments du groupe VIB et du groupe VIII, et
- de 0 à 20%, de préférence de 0,1 à 15% et de manière encore plus préférée de 0,1 à 10% d'au moins un élément choisi dans le groupe VIIA, de préférence le fluor.

Lorsqu'il est présent, l'élément promoteur silicium est sous forme amorphe et localisé principalement sur la matrice. Les éléments du groupe VB, VIB et du groupe VIII du catalyseur de la présente invention peuvent être présents en totalité ou partiellement sous la forme métallique et/ou oxyde et/ou sulfure.

Les catalyseurs selon l'invention peuvent être préparés par toutes les méthodes connues de l'homme du métier.

Un procédé préféré de préparation du catalyseur selon la présente invention comprend les étapes suivantes :

a) on sèche et on pèse un solide dénommé le précurseur, renfermant au moins les composés suivants : au moins une matrice, au moins une zéolithe Y, non globalement désaluminée, éventuellement au moins un élément promoteur choisi dans le groupe constitué par le bore, le phosphore, et le silicium, éventuellement au moins un élément choisi parmi les éléments du groupe VIB et du groupe VIII, éventuellement au moins un élément du groupe VIIA, le tout étant de préférence mis en forme,

b) le solide sec obtenu à l'étape a) est calciné à une température d'au moins 150°C, de préférence au moins 450°C.

c) on imprègne le solide précurseur défini à l'étape b), par une solution contenant au moins un élément du groupe VB, de préférence le niobium,

d) on laisse reposer le solide humide sous une atmosphère humide à une température comprise entre 10 et 120°C,

e) on sèche le solide humide obtenu à l'étape d) à une température comprise entre 60 et 150°C,

f) on calcine le solide séché à l'étape e) sous air sec à une température d'au moins 150°C, de préférence au moins environ 250°C.

Le solide obtenu à l'issue de l'une quelconque des étapes a) à e) peut être imprégné par au moins une solution contenant tout ou partie d'au moins un élément choisi par les éléments du groupe VIB et du groupe VIII, éventuellement d'au moins un élément promoteur choisi dans le groupe constitué par le bore, le phosphore et le silicium et éventuellement d'au moins un élément du groupe VIIA.

La préparation du précurseur de l'étape a) ci-dessus peut être réalisée selon toutes les méthodes classiques de l'homme du métier. Selon un procédé de préparation préféré, le précurseur est obtenu par mélange d'au moins une matrice et d'au moins une zéolithe Y non désaluminée, puis mis en forme, séché et calciné. Le ou les éléments promoteurs choisis dans le groupe constitué par le bore, le phosphore, et le silicium, celui ou ceux choisis parmi les éléments des groupes VIB, VIII, et/ou parmi les éléments du groupe VIIA, sont alors introduits par toute méthode connue de l'homme du métier, à l'une quelconque des étapes a) à e), avant ou après la mise en forme et avant ou après la calcination dudit mélange.

La mise en forme peut être réalisée par exemple par extrusion, par pastillage, par la méthode de la goutte d'huile (oil-drop), par granulation au plateau tournant ou par toute autre méthode bien connue de l'homme du métier. Au moins une calcination peut être effectuée après l'une quelconque des étapes de la préparation, elle est habituellement effectuée sous air à une température d'au moins 150°C, de préférence au moins 300°C. Ainsi, le produit obtenu à l'issue de l'étape a) et/ou de l'étape e) et/ou éventuellement après introduction du ou des éléments choisis parmi les éléments des groupes VIB, VIII, et/ou parmi les éléments promoteurs du groupe constitué par le bore, le phosphore, et le silicium, et/ou parmi les éléments du groupe VIIA, est alors éventuellement calciné sous air, usuellement à une température d'au moins 150°C, de préférence au moins 250°C, de manière plus préférée entre environ 350 et 1000°C.

L'élément hydrogénant peut être introduit à toute étape de la préparation, de préférence lors du mélange, ou de manière très préférée après mise en forme. La mise en forme est suivie d'une calcination, l'élément hydrogénant est introduit avant ou après cette calcination. La préparation se termine dans tous les cas par une calcination à une température de 250 à 600°C. Une des méthodes préférées dans la présente invention consiste à malaxer au moins une zéolithe dans un gel humide d'alumine pendant quelques dizaines de minutes, puis à passer la pâte ainsi obtenue à travers une filière pour former des extrudés de diamètre compris entre 0,4 et 4 mm. La fonction hydrogénante peut être alors introduite en partie seulement (cas, par exemple, des associations d'oxydes de métaux des groupes VIB et VIII) ou en totalité au moment du malaxage de la zéolithe, c'est à dire d'au moins une zéolithe Y non désaluminée, avec au moins un gel d'oxyde choisi comme matrice. Elle peut être introduite par une ou plusieurs opérations d'échange ionique sur le support calciné constitué d'au moins une zéolithe dispersée dans au moins une matrice, à l'aide de solutions contenant les sels précurseurs des métaux choisis lorsque ceux-ci appartiennent au groupe VIII. Elle peut être introduite par une ou plusieurs opérations d'imprégnation du support mis en forme et calciné, par une solution des précurseurs des oxydes des métaux des groupes VIII (notamment le cobalt et le nickel) lorsque les précurseurs des oxydes des métaux du groupe VIB (notamment le molybdène ou le tungstène) ont été préalablement introduits au moment du malaxage du support. Elle peut enfin être introduite par une ou plusieurs opérations d'imprégnation du support calciné constitué d'au moins une zéolithe Y non désaluminée et d'au moins une matrice, par des solutions contenant les précurseurs des oxydes de métaux des groupes VIB et/ou VIII, les précurseurs des oxydes de métaux de groupe VIII étant de préférence introduits après ceux du groupe VIB ou en même temps que ces derniers.

Un autre procédé de préparation préféré consiste à introduire dans un mélange d'au moins une matrice avec au moins une zéolithe Y non désaluminée, avant ou après la mise en forme et avant ou après la calcination dudit mélange, au moins un élément du groupe VB, et au moins un élément choisi parmi les éléments du groupe VIII et du groupe VIB.

D'une façon préférée, le support est imprégné par une solution aqueuse. L'imprégnation du support est de préférence effectuée par la méthode d'imprégnation dite "à sec" bien connue de l'homme du métier. L'imprégnation peut être effectuée en une seule étape par une solution contenant l'ensemble des éléments constitutifs du catalyseur final.

Le bore et/ou le phosphore et/ou le silicium et éventuellement l'élément choisi dans le groupe VIIA des ions halogénures, de préférence le fluor, peuvent être introduits dans le catalyseur à divers niveaux de la préparation selon toute technique connue de l'homme de métier.

Une méthode préférée selon l'invention consiste à déposer, par exemple par imprégnation, le ou les éléments promoteurs choisis par exemple le couple bore-silicium sur le précurseur calciné ou non, de préférence calciné. Pour cela on prépare une solution aqueuse d'au moins un sel de bore tel que le biborate d'ammonium ou le pentaborate d'ammonium en milieu alcalin et en présence d'eau oxygénée et on procède à une imprégnation dite à sec, dans laquelle on rempli le volume des pores du précurseur par la solution contenant le bore. Dans le cas où l'on dépose par exemple du silicium, on utilisera, par exemple, une solution d'un composé du silicium de type silicone.

Le dépôt de bore et de silicium peut aussi être réalisé de manière simultanée en utilisant par exemple une solution contenant un sel de bore et un composé du silicium de type silicone. Ainsi, par exemple dans le cas où le précurseur est un catalyseur de type nickel-molybdène supporté sur alumine et zéolithe choisie dans le groupe constitué par les zéolithes Y non désaluminées, il est possible d'imprégner ce précurseur par de la solution aqueuse de biborate d'ammonium et de silicone Rhodorsil E1P de la société Rhône Poulenc, de procéder à un séchage par exemple à 80°C, puis d'imprégner par une solution de fluorure d'ammonium, de procéder à un séchage par exemple à 80°C, et de procéder à une calcination par exemple et de façon préférée sous air en lit traversé, par exemple à 500°C pendant 4 heures. On dépose ensuite l'élément du groupe VB selon toute méthode connue de l'homme de métier.

L'élément promoteur choisi dans le groupe formé par le bore, le phosphore et le silicium, et l'élément choisi parmi les halogènes du groupe VIIA, peuvent également être introduits par une ou plusieurs opérations d'imprégnation, par exemple avec excès de solution, sur le précurseur calciné.

Ainsi, par exemple, il est possible d'imprégner le précurseur par une solution aqueuse de biborate d'ammonium et/ou de silicone Rhodorsil E1P de la société Rhône Poulenc de procéder à un séchage par exemple à 80°C, puis d'imprégner par une solution de fluorure d'ammonium, de procéder à un séchage par exemple à 80°C, et de procéder à une calcination par exemple et de façon préférée sous air en lit traversé, par exemple à 500°C pendant 4 heures. On dépose ensuite l'élément du groupe VB selon toute méthode connue de l'homme de métier.

D'autres séquences d'imprégnation peuvent être mise en oeuvre pour obtenir le catalyseur de la présente invention.

Il est par exemple possible d'imprégner le précurseur avec une solution contenant un des éléments promoteurs (B, P, Si), de sécher, de calciner puis d'imprégner le solide obtenu avec la solution contenant un autre élément promoteur, de sécher, de calciner. Il est aussi possible d'imprégner le précurseur avec une solution contenant deux des éléments promoteurs, de sécher, de calciner puis d'imprégner le solide obtenu avec la solution contenant un autre élément promoteur, de sécher, et de procéder à une calcination finale. On dépose ensuite l'élément du groupe VB selon toute méthode connue de l'homme de métier.

Le catalyseur de la présente invention peut renfermer un élément (métal) du groupe VIII tel que fer, cobalt, nickel, ruthénium, rhodium, palladium, osmium, iridium ou platine. Parmi les éléments du groupe VIII on emploie de préférence un élément choisi dans le groupe formé par le fer, le cobalt, le nickel et le ruthénium. D'une manière avantageuse on utilise les associations d'éléments suivantes : nickel-niobium-molybdène, cobalt-niobium-molybdène, fer-niobium-molybdène, nickel-niobium-tungstène, cobalt-niobium-tungstène, fer-niobium-tungstène, les associations préférés étant : nickel-niobium-molybdène, cobalt-niobium-molybdène. Il est également possible d'utiliser des associations de quatre éléments par exemple nickel-cobalt-niobium-molybdène. On peut également utiliser des associations contenant un métal noble tel que ruthénium-niobium-molybdène, ou encore ruthénium-nickel-niobium-molybdène.

Dans le cas où les éléments sont introduits en plusieurs imprégnations des sels précurseurs correspondants, une étape de calcination intermédiaire du catalyseur devra généralement être effectuée à une température comprise entre 250 et 600 °C. L'imprégnation du molybdène peut être facilitée par ajout d'acide phosphorique dans les solutions de paramolybdate d'ammonium, ce qui permet d'introduire aussi le phosphore de façon à promouvoir l'activité catalytique. D'autres composés du phosphore peuvent être utilisés comme il est bien connu de l'homme du métier.

L'imprégnation du niobium peut être facilitée par ajout d'acide oxalique et éventuellement d'oxalate d'ammonium dans les solutions de d'oxalate de niobium. D'autres composés peuvent être utilisés pour améliorer la solubilité et faciliter l'imprégnation du niobium comme il est bien connu de l'homme du métier.

La sulfuration peut se faire par toute méthode connue de l'homme du métier. La méthode préférée selon l'invention consiste à chauffer le catalyseur non calciné sous flux d'un mélange hydrogène-hydrogène sulfuré ou sous flux d'un mélange azote-hydrogène sulfuré ou encore sous hydrogène sulfuré pur à une température comprise entre 150 et 800°C, de préférence entre 250 et 600°C, généralement dans une zone réactionnelle à lit traversé.

La matrice minérale poreuse, habituellement amorphe ou mal cristallisée, est en général constituée d'au moins un oxyde réfractaire sous forme amorphe ou mal cristallisé. Ladite matrice est habituellement choisie dans le groupe formé par l'alumine, la silice, la silice-alumine, ou un mélange de aux moins deux des oxydes cités ci dessus. On peut choisir également les aluminates. On préfère utiliser des matrices contenant de l'alumine, sous toutes ces formes connues de l'homme du métier, par exemple l'alumine gamma.

Les sources d'élément du groupe VB qui peuvent être utilisées sont bien connues de l'homme du métier. Par exemple, parmi les sources de niobium, on peut utiliser les oxydes, tel que le pentaoxyde de diniobium $Nb_2O_5$, l'acide niobique $Nb_2O_5.H_2O$, les hydroxydes de niobium et les polyoxoniobates, les alkoxydes de niobium de formule $Nb(OR_1)_3$ où $R_1$ est un radical alkyle, l'oxalate de niobium $NbO(HC_2O_4)_5$, le niobate d'ammonium. On utilise de préférence l'oxalate de niobium ou le niobate d'ammonium.

La zéolithe Y non désaluminée est caractérisée par un paramètre de maille supérieur à 2,438 nm, de préférence supérieur à 2,442 nm, et de manière très préférée supérieur à 2,455 nm, et un rapport SiO2/Al2O3 global inférieur à 8, de préférence inférieur à 7,5, de manière très préférée inférieur à 7.

De manière préférée, on utilise une zéolithe Y non globalement désaluminée présentant en outre les propriétés suivantes :

- un rapport molaire $SiO_2/Al_2O_3$ de charpente supérieur au rapport molaire $SiO_2/Al_2O_3$ global, et inférieur à environ 21 calculé d'après la corrélation dite de Fichtner-Schmittler (dans Cryst. Res. Tech. 1984, 19, K1)].

- une teneur en métaux alcalino-terreux ou alcalins inférieure à 0,2% poids déterminée sur la zéolithe calcinée à 1100°C.
- une surface spécifique déterminée par la méthode B.E.T. supérieure à environ 400 m2/g, et de préférence supérieure à 600 m2/g

La source de soufre peut être le soufre élémentaire, le sulfure de carbone, l'hydrogène sulfuré, les hydrocarbures soufrés tels que le diméthyl sulfure, le diméthyl disulfure, les mercaptans, les composés du thiophène, les thiols, les polysulfures tels que par exemple le ditertiononylpolysulfure ou TPS-37 de la société ATOCHEM, les coupes pétrolières riches en soufre telles que l'essence, le kérosène, le gazole, seuls ou en mélanges avec un des composés soufrés cité ci-dessus. La source de soufre préférée est le sulfure de carbone ou l'hydrogène sulfuré.

La source de phosphore préférée est l'acide orthophosphorique $H_3PO_4$, mais ses sels et esters comme les phosphates d'ammonium conviennent également. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole.

De nombreuses sources de silicium peuvent être employées. Ainsi, on peut utiliser l'orthosilicate d'éthyle Si(OEt)4, les siloxanes, les polysiloxanes, les silicones, les émulsions de silicones, les silicates d'halogénures comme le fluorosilicate d'ammonium $(NH_4)_2SiF_6$ ou le fluorosilicate de sodium $Na_2SiF_6$. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool. Le silicium peut également être ajouté par exemple par imprégnation d'un composé du silicium de type silicone mis en suspension dans l'eau.

La source de bore peut être l'acide borique, de préférence l'acide orthoborique $H_3BO_3$, le biborate ou le pentaborate d'ammonium, l'oxyde de bore, les esters boriques. Le bore peut par exemple être introduit sous la forme d'un mélange d'acide borique, d'eau oxygénée et un composé organique basique contenant de l'azote tels que l'ammoniaque, les amines primaires et secondaires, les amines cycliques, les composés de la famille de la pyridine et des quinoléines et les composés de la famille du pyrrole. Le bore peut être introduit par exemple au moyen d'une solution d'acide borique dans un mélange eau/alcool.

Les sources d'éléments du groupe VIIA qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium $(NH_4)_2SiF_6$, le tétrafluorure de silicium SiF4 ou de sodium $Na_2SiF_6$. Le fluor peut être introduit par exemple par imprégnation d'une solution aqueuse d'acide fluorhydrique ou de fluorure d'ammonium.

Les sources d'éléments du groupe VIB qui peuvent être utilisées sont bien connues de l'homme du métier. Par exemple, parmi les sources de molybdène et de tungstène, on peut utiliser les oxydes et hydroxydes, les acides molybdiques et tungstiques et leurs sels en particulier les sels d'ammonium tels que le molybdate d'ammonium, l'heptamolybdate d'ammonium, le tungstate d'ammonium, l'acide phosphomolybdique, l'acide phosphotungstique et leurs sels, l'acide silicomolybdique l'acide silicotungstique et leurs sels. On utilise de préférence les oxydes et les sels d'ammonium tels que le molybdate d'ammonium, l'heptamolybdate d'ammonium et le tungstate d'ammonium.

Les sources d'éléments du groupe VIII qui peuvent être utilisées sont bien connues de l'homme du métier. Par exemple, pour les métaux non nobles on utilisera les nitrates, les sulfates, les phosphates, les halogénures par exemple, chlorures, bromures et fluorures, les carboxylates par exemple acétates et carbonates. Pour les métaux nobles on utilisera les halogénures, par exemple les chlorure, les nitrates, les acides tels que l'acide chloroplatinique, les oxychlorures tels que l'oxychlorure ammoniacal de ruthénium.

Les catalyseurs obtenus par la présente invention sont mise en forme sous la forme de grains de différentes forme et dimensions. Ils sont utilisés en général sous la forme d'extrudés cylindriques ou polylobés tels que bilobés, trilobés, polylobés de forme droite ou torsadée, mais peuvent éventuellement être fabriqués et employés sous la forme de poudre concassées, de tablettes, d'anneaux, de billes, de roues. Ils présentent une surface spécifique mesurée par adsorption d'azote selon la méthode BET (Brunauer, Emmett, Teller, J. Am. Chem. Soc., vol. 60, 309-316 (1938)) comprise entre environ 50 et environ 600 m2/g, un volume poreux mesuré par porosimétrie au mercure compris entre environ 0,2 et environ 1,5 cm3/g et une distribution en taille de pores pouvant être monomodale, bimodale ou polymodale.

Les catalyseurs obtenus par la présente invention sont utilisés pour l'hydrocraquage de charges hydrocarbonées telles que les coupes pétrolières. Les charges employées dans le procédé sont des essences, des kérosènes, des gas-oils, des gas-oils sous vide, des résidus atmosphériques, des résidus sous vide, des distillats atmosphériques, des distillats sous vide, des fuels lourds, des huiles, des cires et des paraffines, des huiles usagées, des résidus ou des bruts désasphaltés, des charges provenant des procédés de conversions thermiques ou catalytiques et leurs mélanges. Elles contiennent des hétéroatomes tels que soufre, oxygène et azote et éventuellement des métaux.

Les catalyseurs ainsi obtenus sont utilisés avantageusement pour l'hydrocraquage en particulier de coupes hydrocarbonées lourdes de type distillats sous vide, résidus désasphaltés ou hydrotraités ou équivalents. Les coupes lourdes sont de préférence constituées d'au moins de 80% en volume de composés dont les points d'ébullition sont d'au moins 350°C et de préférence compris entre 350 et 580 °C (c'est-à-dire correspondant à des composés contenant au moins 15 à 20 atomes de carbone). Elles contiennent généralement des hétéroatomes tels que soufre et azote. La teneur en azote est usuellement comprise entre 1 et 5000 ppm poids et la teneur en soufre entre 0,01 et 5% poids.

Les conditions de l'hydrocraquage telles que température, pression, taux de recyclage d'hydrogène, vitesse volumique horaire, pourront être très variables en fonction de la nature de la charge, de la qualité des produits désirés et des installations dont dispose le raffineur. La température est en général supérieure à 200°C et préférentiellement comprise entre 250°C et 480°C. La pression est supérieure à 0,1 MPa et préférentiellement supérieure à 1 MPa. La quantité d'hydrogène est au minimum de 50 et souvent compris entre 80 et 5000 normaux litres d'hydrogène par litre de charge. La vitesse volumique horaire est comprise en général entre 0,1 et 20 volume de charge par volume de catalyseur et par heure.

Les catalyseurs de la présente invention sont de préférence soumis à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature soit in-situ, c'est-à-dire dans le réacteur d'hydrocraquage, soit ex-situ.

Une méthode de sulfuration classique bien connue de l'homme du métier consiste à chauffer en présence d'hydrogène sulfuré à une température comprise entre 150 et 800°C, de préférence entre 250 et 600°C, généralement dans une zone réactionnelle à lit traversé.

Le catalyseur de la présente invention peut être avantageusement employé pour l'hydrocraquage de coupes de type distillats sous vide fortement chargée en soufre et azote plus particulièrement par exemple, les coupes à teneur en soufre supérieure à 0,1% poids et à teneur en azote supérieure à 10 ppm.

Dans un premier mode de réalisation ou d'hydrocraquage partiel encore appelé hydrocraquage doux, le niveau de conversion est inférieur à 55%. Le catalyseur selon l'invention est alors employé à une température en général supérieure ou égale à 230°C, de préférence comprise entre 300°C et 480°C, et de manière plus préférée comprise entre 350°C et 450°C. La pression est préférentiellement supérieure à 2MPa, de manière plus préférée 3MPa, et préférentiellement inférieure à 12MPa, de manière plus préférée inférieure à 10MPa. La quantité d'hydrogène est au minimum de 100 normaux litres d'hydrogène par litre de charge, et préférentiellement comprise entre 200 et 3000 normaux litre d'hydrogène par litre de charge. La vitesse volumique horaire est préférentiellement comprise entre 0,15 et 10 volume de charge par volume de catalyseur et par heure. Dans ces conditions, les catalyseurs de la présente invention présentent une meilleure activité en conversion, en hydrodésulfuration et en hydrodéazotation que les catalyseurs commerciaux.

Dans un deuxième mode de réalisation, le catalyseur de la présente invention peut être employé pour l'hydrocraquage partiel, avantageusement dans des conditions de pression d'hydrogène modérée, de coupes par exemple de type distillats sous vide fortement chargées en soufre et azote qui ont été préalablement hydrotraitées. Dans ce mode d'hydrocraquage le niveau de conversion est inférieur à 55%. Dans ce cas le procédé de conversion de coupe pétrolière se déroule en deux étapes, les catalyseurs selon l'invention étant utilisés dans la deuxième étape. Le catalyseur de la première étape a une fonction d'hydrotraitement et comprend une matrice de préférence à base d'alumine, et de préférence ne contenant pas de zéolithe, et au moins un métal ayant une fonction hydrogénante. Ladite matrice est une matrice minérale poreuse amorphe ou mal cristallisée de type oxyde. On peut citer à titre d'exemple non limitatif les alumines, les silices, les silice-alumine. On peut choisir également les aluminates. On préfère utiliser des matrices contenant de l'alumine, sous toutes ces formes connues de l'Homme du métier, et de manière encore plus préférée les alumines, par exemple l'alumine gamma. La fonction d'hydrotraitement est assurée par au moins un métal ou composé de métal du groupe VIII tels que le nickel et le cobalt notamment. On peut utiliser une combinaison d'au moins un métal ou composé de métal du groupe VIB (par exemple le molybdène ou le tungstène) et d'au moins un métal ou composé de métal du groupe VIII (par exemple le cobalt ou le nickel) de la classification périodique des éléments. La concentration totale en oxydes de métaux des groupes VIB et VIII est préférentiellement comprise entre 5 et 40 % en poids et de manière plus préférée entre 7 et 30 % en poids et le rapport pondéral exprimé en oxyde du métal (des métaux) du groupe VIB sur oxyde du métal (des métaux) du groupe VIII est préférentiellement compris entre 1,25 et 20, et de manière plus préférée entre 2 et 10. De plus, ce catalyseur peut contenir du phosphore. La teneur en phosphore, exprimée en concentration en pentaoxyde de diphosphore $P_2O_5$ sera préférentiellement d'au plus 15%, de manière plus préférée comprise entre 0,1 et 15 % en poids et de manière très préférée comprise entre 0,15 et 10% en poids. Il peut également contenir du bore dans un rapport B/P préférentiellement compris entre 1,05 et 2 (atomique), la somme des teneurs en bore (B) et phosphore (P) exprimée en oxydes étant préférentiellement comprise entre 5 et 15 % poids.

La première étape se déroule généralement à une température comprise entre 350 et 460°C, de préférence entre 360 et 450°C, une pression totale d'au moins 2MPa, de préférence au moins 3 MPa, une vitesse volumique horaire comprise entre de 0,1 et 5 volume de charge par volume de catalyseur et par heure, de préférence entre 0,2 et 2 volume de charge par volume de catalyseur et par heure et avec une quantité d'hydrogène d'au moins 100 normaux litres par litre de charge, et de préférence comprise entre 260 et 3000 normaux litres par litre de charge.

Pour l'étape de conversion avec le catalyseur selon l'invention (ou seconde étape), les températures sont en général supérieures ou égales à 230°C et souvent comprises entre 300°C et 480°C et de manière préférée entre 300 et 450°C. La pression est en général d'au moins 2MPa et de préférence d'au moins 3MPa. La quantité d'hydrogène est au minimum de 100 normaux litres d'hydrogène par litre de charge et préférentiellement comprise entre 200 et 3000 litres d'hydrogène par litre de charge. La vitesse volumique horaire est préférentiellement comprise entre 0,15 et 10 volume de charge par volume de catalyseur et par heure. Dans ces conditions, les catalyseurs de la présente invention présentent une meilleure activité en conversion, en hydrodésulfuration, en hydrodéazotation et une meilleure sélectivité en distillats moyens que les catalyseurs commerciaux. La durée de vie des catalyseurs est également améliorée dans la plage de pression modérée.

Dans un autre mode de réalisation, le catalyseur de la présente invention peut être employé pour l'hydrocraquage dans des conditions de pression d'hydrogène élevées, en général d'au moins 5 MPa. Les coupes traitées sont par exemple de type distillats sous vide fortement chargée en soufre et azote qui ont été préalablement hydrotraitées. Dans ce mode d'hydrocraquage le niveau de conversion est supérieur à 55%. Dans ce cas, le procédé de conversion de coupe pétrolière se déroule en deux étapes, le catalyseur selon l'invention étant utilisé dans la deuxième étape.

Le catalyseur de la première étape a une fonction d'hydrotraitement et comprend une matrice de préférence à base d'alumine, et de préférence ne contenant pas de zéolithe, et au moins un métal ayant une fonction hydrogénante. Ladite matrice peut également être constituée de, ou renfermer, de la silice, de la silice-alumine, de l'oxyde de bore, de la magnésie, de la zircone, de l'oxyde de titane ou une combinaison de ces oxydes. La fonction hydro-deshydrogénante est assurée par au moins un métal ou composé de métal du groupe VIII tels que le nickel et le cobalt notamment. On peut utiliser une combinaison d'au moins un métal ou composé de métal du groupe VIB (par exemple le molybdène ou le tungstène) et d'au moins un métal ou composé de métal du groupe VIII (par exemple le cobalt ou le nickel) de la classification périodique des éléments. La concentration totale en oxydes de métaux des groupes VIB et VIII est préférentiellement comprise entre 5 et 40 % en poids et de manière plus préférée entre 7 et 30 % en poids et le rapport pondéral exprimé en oxyde métallique en métal (ou métaux) du groupe VIB sur métal (ou métaux) du groupe VIII est préférentiellement compris entre 1,25 et 20 et de manière plus préférée entre 2 et 10. De plus, ce catalyseur peut éventuellement contenir du phosphore. La teneur en phosphore, exprimée en concentration en pentaoxyde de diphosphore $P_2O_5$ sera préférentiellement d'au plus 15% de manière plus préférée comprise entre 0,1 et 15 % en poids et de manière très préférée comprise entre 0,15 et 10% en poids. Il peut également contenir du bore dans un rapport B/P préférentiellement compris entre 1,02 et 2 (atomique), la somme des teneurs en bore (B) et en phosphore (P) exprimée en oxydes étant préférentiellement comprise entre 5 et 15 % poids.

La première étape se déroule généralement à une température comprise entre 350 et 460°C, de préférence entre 360 et 450°C, une pression d'au moins 2MPa, de préférence d'au moins 3MPa, une vitesse volumique horaire comprise entre 0,1 et 5 volume de charge par volume de catalyseur et par heure, de préférence entre 0,2 et 2 volume de charge par volume de catalyseur et par heure et avec une quantité d'hydrogène d'au moins 100 normaux litres d'hydrogène par litre de charge, et de préférence comprise entre 260 et 3000 normaux litres d'hydrogène par litre de charge.

Pour l'étape de conversion avec le catalyseur selon l'invention (ou seconde étape), les températures sont en général supérieures ou égales à 230°C, souvent comprises entre 300°C et 480°C, et de manière préférée entre 330°C et 440°C. La pression est en général supérieure à 5MPa et de préférence supérieure à 7MPa. La quantité d'hydrogène est au minimum de 100 normaux litres d'hydrogène par litre de charge et préférentiellement comprise entre 200 et 3000 litres d'hydrogène par litre de charge. La vitesse volumique horaire est préférentiellement comprise entre 0,15 et 10 volume de charge par volume de catalyseur et par heure.

Dans ces conditions, les catalyseurs de la présente invention présentent une meilleure activité en conversion que les catalyseurs commerciaux.

Les exemples suivants illustrent la présente invention sans toutefois en limiter la portée.

Exemple 1

Préparation de supports contenant une zéolithe Y non désaluminée

Un support de catalyseur d'hydrocraquage contenant une zéolithe Y non globalement désaluminée a été fabriqué en grande quantité de façon à pouvoir préparer différents catalyseurs à base du même support. Pour cela on utilise 19,7 % poids d'une zéolithe Y non désaluminée de paramètre cristallin égal à 2,453 nm et de rapport SiO2/Al2O3 global de 6,6 et de rapport SiO2/Al2O3 de charpente de 8,6, que l'on mélange à 80,3 % poids d'une matrice composée de boehmite tabulaire ultrafine ou gel d'alumine commercialisée sous le nom SB3 par la société Condéa Chemie Gmbh. Ce mélange de poudre a été ensuite mélangé à une solution aqueuse contenant de l'acide nitrique à 66% ( 7% poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés pendant une nuit à 120°C puis calcinés à 550°C pendant 2 heures sous air humide contenant 7,5% volume d'eau. On obtient ainsi le support Z3 sous la forme d'extrudés cylindriques de 1,2 mm de diamètre, ayant une surface spécifique de 351 m$^2$/g, un volume poreux de 0,58 cm$^3$/g et une distribution en taille de pore monomodale centrée sur 10 nm. L'analyse du support par diffraction des rayons X révèle que celui-ci est composé d'alumine gamma cubique de faible cristallinité et de zéolithe Y de paramètre de maille 2,444 nm et de rapport SiO2/Al2O3 global de 6,7 et de rapport SiO2/Al2O3 de charpente de 13,9.

De la même manière, un support de catalyseur d'hydrocraquage contenant une faible quantité de zéolithe Y non globalement désaluminée a été fabriqué en grande quantité de façon à pouvoir préparer différents catalyseurs à base du même support. Pour cela on utilise 8,6 % poids de la zéolithe Y décrite ci-dessus que l'on mélange à 91,4 % poids d'une matrice composée de boehmite tabulaire ultrafine ou gel d'alumine commercialisée sous le nom SB3 par la société Condéa Chemie Gmbh. Ce mélange de poudre a été ensuite mélangé à une solution aqueuse contenant de l'acide nitrique à 66% ( 7% poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés pendant une nuit à 120°C puis calcinés à 550°C pendant 2 heures sous air humide contenant 7,5% volume d'eau. On obtient ainsi le support Z5 sous la forme d'extrudés cylindriques de 1,2 mm de diamètre, ayant une surface spécifique de 259 m$^2$/g, un volume poreux de 0,57 cm$^3$/g et une distribution en taille de pore monomodale centrée sur 10 nm. L'analyse du support par diffraction des rayons X révèle que celui-ci est composé d'alumine gamma cubique de faible cristallinité et de zéolithe Y de paramètre de maille 2,444 nm et de rapport SiO2/Al2O3 global de 6,7 et de rapport SiO2/Al2O3 de charpente de 14,1.

## Exemple 2

### Préparation de catalyseurs d'hydrocraquage contenant une zéolithe Y non désaluminée (non conforme à l'invention)

Les extrudés de support Z3 de l'exemple 1 sont imprégnés à sec par une solution aqueuse d'un mélange d'heptamolybdate d'ammonium et de nitrate de nickel, séchés une nuit à 120°C sous air et enfin calcinés sous air à 550°C. Les teneurs pondérales en oxydes du catalyseur NiMo3 obtenus sont indiquées dans le tableau 1. Le catalyseur NiMo3 contient en particulier 16,6 % poids de zéolithe Y . L'analyse du support par diffraction des rayons X révèle que celui-ci est composée d'alumine gamma cubique de faible cristallinité et de zéolithe Y de paramètre de maille 2,444 nm et de rapport SiO2/Al2O3 global de 6,6 et de rapport SiO2/Al2O3 de charpente de 14,2.

Le catalyseur NiMo3 a ensuite été imprégné par une solution aqueuse renfermant une émulsion de silicone Rhodorsil EP1 (Rhone-Poulenc) de manière à déposer environ 2% de SiO2. Les extrudés imprégnés sont ensuite séchés pendant une nuit à 120°C puis calcinés à 550°C pendant 2 heures sous air sec. On obtient ainsi le catalyseur NiMo3Si. Enfin, un catalyseur NiMo3BSi a été obtenu par imprégnation du catalyseur NiMo3 par une solution aqueuse renfermant le biborate d'ammonium et l'émulsion de silicone Rhodorsil EP1(Rhone-Poulenc). Les extrudés imprégnés sont alors séchés pendant une nuit à 120°C puis calcinés à 550°C pendant 2 heures sous air sec.

Les extrudés de support Z3 de l'exemple 1 sont également imprégnés à sec par une solution aqueuse d'un mélange d'heptamolybdate d'ammonium, de nitrate de nickel et d'acide orthophosphorique, séchés une nuit à 120°C sous air et enfin calcinés sous air à 550°C. Le catalyseur NiMo3P contient en particulier 15,7 % % poids de zéolithe Y. L'analyse du support par diffraction des rayons X révèle que celui-ci est composé d'alumine gamma cubique de faible cristallinité et de zéolithe Y de de paramètre de maille 2,444 nm et de rapport SiO2/Al2O3 global de 6,7 et de rapport SiO2/Al2O3 de charpente de 14,7.

Nous avons imprégné l'échantillon de catalyseur NiMo3P par une solution aqueuse renfermant le biborate d'ammonium et l'émulsion de silicone Rhodorsil EP1(Rhone-Poulenc) de manière à obtenir un catalyseur NiMo3PBSi contenant du phosphore, du bore et du silicium. Les autres étapes de la procédure sont les mêmes que celles indiquées ci dessus. Les caractéristiques des catalyseurs NiMo3 sont résumées dans le tableau 1.

Tableau 1 :

| Caractéristiques des catalyseurs NiMo3 et NiMo5 | | | | | | |
|---|---|---|---|---|---|---|
| Catalyseur | NiMo3 | NiMo3 Si | NiMo3 BSi | NiMo3 PBSi | NiMo5 | NiMo5 P |
| MoO$_3$ (% pds) | 13,1 | 12,8 | 12,5 | 12,1 | 15,2 | 14,6 |
| NiO (% pds) | 2,84 | 2,8 | 2,7 | 2,6 | 2,8 | 2,7 |

Tableau 1 :  (suite)

| Caractéristiques des catalyseurs NiMo3 et NiMo5 | | | | | | |
|---|---|---|---|---|---|---|
| Catalyseur | NiMo3 | NiMo3 Si | NiMo3 BSi | NiMo3 PBSi | NiMo5 | NiMo5 P |
| $P_2O_5$ (% pds) | 0 | 0 | 0 | 5,0 | 0 | 4,6 |
| $B_2O_3$ (% pds) | 0 | 0 | 2,4 | 2,3 | 0 | 0 |
| $SiO_2$ total (% pds) | 13,6 | 15,5 | 15,1 | 14,5 | 6,1 | 5,8 |
| $Al_2O_3$ total (% pds) | 70,46 | 68,9 | 67,3 | 63,5 | 75,9 | 72,3 |
| Y (%pds) | 16,6 | 16,2 | 15,8 | 14,9 | 7,1 | 6,7 |

Les extrudés de support Z5 contenant une faible quantité de zéolithe Y non désaluminée de paramètre cristallin égal à 2,444 nm, de rapport SiO2/Al2O3 global égal à 6,7 et de rapport SiO2/Al2O3 de charpente de 14,1 de l'exemple 3 sont imprégnés à sec par une solution aqueuse d'un mélange d'heptamolybdate d'ammonium et de nitrate de nickel, séchés une nuit à 120°C sous air et enfin calcinés sous air à 550°C. Les teneurs pondérales en oxydes du catalyseur NiMo5 obtenus sont indiquées dans le tableau 2. Le catalyseur NiMo5 contient en particulier 7,1 % poids de zéolithe Y de paramètre de maille 2,443nm et de rapport SiO2/Al2O3 global de 6,8 et de rapport SiO2/Al2O3 de charpente de 14,9.

Les extrudés de support Z5 contenant une zéolithe Y de l'exemple 1 sont également imprégnés à sec par une solution aqueuse d'un mélange d'heptamolybdate d'ammonium, de nitrate de nickel et d'acide orthophosphorique, séchés une nuit à 120°C sous air et enfin calcinés sous air à 550°C. Les teneurs pondérales en oxydes du catalyseur NiMo5P obtenu sont indiquées dans le tableau 1.

Exemple 3

Préparation de catalyseurs d'hydrocraquage contenant une zéolithe Y non désaluminée et un élément du groupe VB (conforme à l'invention)

Les extrudés de support Z3 contenant une zéolithe Y non désaluminée de l'exemple 1 sont imprégnés par une solution aqueuse d'oxalate de niobium $Nb(HC_2O_4)_5$, d'acide oxalique et d'oxalate d'ammonium. La solution aqueuse contenant le niobium est préparée à partir de 1330 ml d'eau dans laquelle on dissous 33g d'acide oxalique, 37,2 g d'oxalate d'ammonium et 92,3 g d'oxalate de niobium. Pour préparer la solution, on dissous dans un premier temps le mélange acide oxalique et oxalate d'ammonium et lorsque la solution est limpide on chauffe la dite solution à 55°C et on ajoute l'oxalate de niobium. On complète ensuite en eau pour obtenir 1330 ml de solution. Le support Z3 de l'exemple 1 ci-dessus est imprégné par la méthode dite avec excès de solution. Les 1330 ml de solution sont mis en contact avec 380 g de catalyseur. Ceci permet de déposer environ 5% poids de Nb sur le support Z3. Au bout de deux heures on récupère les extrudés. Ceux-ci sont ensuite séchés une nuit à 120°C sous un courant d'air sec, puis calciné à 500°C sous air sec pendant 2 heures. On obtient ainsi le précurseur NbZ3.

On procède de la même manière avec le support Z5 de l'exemple 1 et on obtient le précurseur NbZ5.

Les deux précurseurs NbZ3 et NbZ5 contenant le niobium préparé ci-dessus sont imprégnés à sec par une solution aqueuse d'un mélange d'heptamolybdate d'ammonium et de nitrate de nickel, séchés une nuit à 120°C sous air et enfin calcinés sous air à 550°C. Les teneurs pondérales en oxydes des catalyseurs NbNiMo3 et NbNiMo5 obtenus sont indiquées dans le tableau 2.

Le catalyseur NbNiMo3 est ensuite imprégné par une solution aqueuse renfermant une émulsion de silicone Rhodorsil EP1 (Rhone-Poulenc). Les extrudés imprégnés sont ensuite séchés pendant une nuit à 120°C puis calcinés à 550°C pendant 2 heures sous air sec. On obtient ainsi le catalyseur NbNiMo3Si.

Enfin, un catalyseur NbNiMo3BSi a été obtenu par imprégnation du catalyseur NbNiMo3 par une solution aqueuse renfermant le biborate d'ammonium et l'émulsion de silicone Rhodorsil EP1(Rhone-Poulenc) de manière à déposer environ 2% de B203 et 2% de SiO2. Les extrudés imprégnés sont alors séchés pendant une nuit à 120°C puis calcinés à 550°C pendant 2 heures sous air sec.

Les supports NbZ3 et NbZ5 contenant le niobium préparé ci-dessus sont imprégnés à sec par une solution aqueuse d'un mélange d'heptamolybdate d'ammonium, de nitrate de nickel et d'acide orthophosphorique, séchés une nuit à 120°C sous air et enfin calcinés sous air à 550°C. Les teneurs pondérales en oxydes du catalyseur NbNiMo5P obtenu sont indiquées dans le tableau 2.

Nous avons imprégné l'échantillon de catalyseur NbNiMo3P par une solution aqueuse renfermant du biborate d'ammonium et l'émulsion de silicone Rhodorsil EP1(Rhone-Poulenc) de manière à obtenir le catalyseur NbNiMo3PBSi. Après maturation à température ambiante dans une atmosphère saturée en eau, les extrudés imprégnés sont séchés pendant une nuit à 120°C puis calcinés à 550°C pendant 2 heures sous air sec.

Tableau 2:

| Caractéristiques des catalyseurs NbNiMo3 et NbNiMo5 | | | | | | |
|---|---|---|---|---|---|---|
| Catalyseur | NbNiMo3 | NbNiMo3 Si | NbNiMo3 BSi | NbNiMo3 PBSi | NbNiMo5 | NbNiMo5 P |
| $Nb_2O_5$ (% pds) | 5,1 | 5,0 | 5,0 | 5,0 | 5,2 | 5,1 |
| $MoO_3$ (% pds) | 12,5 | 12,1 | 11,9 | 11,2 | 14,4 | 13,8 |
| NiO (% pds) | 2,7 | 2,6 | 2,6 | 2,4 | 2,6 | 2,5 |
| $P_2O_5$ (% pds) | 0 | 0 | 0 | 4,7 | 0 | 4,4 |
| $B_2O_3$ (% pds) | 0 | 0 | 2,3 | 2,1 | 0 | 0 |
| $SiO_2$ total (% pds) | 13,65 | 15,5 | 15,1 | 14,5 | 5,8 | 5,6 |
| $Al_2O_3$ total (% pds) | 66,1 | 64,8 | 63,1 | 60,1 | 72,0 | 68,6 |
| Y (%pds) | 15,7 | 15,4 | 15,0 | 14,1 | 6,7 | 6,4 |

Exemple 4 :

Comparaison des catalyseurs en hydrocraquage d'un gazole sous vide à basse pression.

Les catalyseurs dont les préparations sont décrites dans les exemples précédents sont utilisés dans les conditions de l'hydrocraquage à pression modérée sur une charge pétrolière dont les principales caractéristiques sont les suivantes :

| | |
|---|---|
| Densité (20/4) | 0,921 |
| Soufre (% poids) | 2,46 |
| Azote (ppm poids) | 1130 |
| Distillation simulée | |
| point initial | 365°C |
| point 10 % | 430°C |
| point 50 % | 472°C |
| point 90 % | 504°C |
| point final | 539°C |
| point d'écoulement | + 39°C |

L'unité de test catalytique comprend deux réacteurs en lit fixe, à circulation ascendante de la charge ("upflow"). Dans chacun des réacteurs, on introduit 40 ml de catalyseur. Dans le premier réacteur, celui dans lequel la charge passe en premier, on introduit le catalyseur de première étape d'hydrotraitement HTH548 vendu par la société Procatalyse comprenant un élément du groupe VI et un élément du groupe VIII déposés sur alumine. Dans le second réacteur, celui dans lequel la charge passe en dernier, on introduit le catalyseur d'hydrocraquage (série NiMo5). Les deux catalyseurs subissent une étape de sulfuration in-situ avant réaction. Une fois la sulfuration réalisée, la charge décrite ci-dessus peut être transformée. La pression totale est de 8,5 MPa, le débit d'hydrogène est de 500 litres d'hydrogène gazeux par litre de charge injectée, la vitesse volumique horaire est de 0,8 $h^{-1}$. Les deux réacteurs fonctionnement à la même température.

Les performances catalytiques sont exprimées par la conversion brute à 400°C (CB), par la sélectivité brute en distillats moyens (coupe 150-380°C) (SB) et par les conversions en hydrodésulfuration (HDS) et en hydrodéazotation (HDN). Ces performances catalytiques sont mesurées sur le catalyseur après qu'une période de stabilisation, généralement au moins 48 heures, ait été respectée.

La conversion brute CB est prise égale à :

$$CB = \% \text{ pds de } 380^{moins} \text{ de l'effluent}$$

La fraction 380 $^{moins}$ de l'effluent signifiant la partie de l'effluent bouillant au dessous de 380°C.

La sélectivité brute SB est prise égale à :

$$SB = 100*\text{poids de la fraction } (150°C\text{-}380°C)/\text{poids de la fraction } 380^{moins} \text{ de l'effluent}$$

La conversion en hydrodésulfuration HDS est prise égale à :

$$HDS = (S_{initial} - S_{effluent})/S_{initial} * 100 = (24600 - S_{effluent})/24600 * 100$$

La conversion en hydrodéazotation HDN est prise égale à :

$$HDN = (N_{initial} - N_{effluent})/N_{initial} * 100 = (1130 - N_{effluent})/1130 * 100$$

Dans le tableau 3 suivant, nous avons reporté la conversion brute CB à 400°C, la sélectivité brute SB, la conversion en hydrodésulfuration HDS et la conversion en hydrodéazotation HDN pour les catalyseurs de l'invention qui ont été testé.

Tableau 3 :

| Activités catalytiques des catalyseurs en hydrocraquage partiel à 400°C | | | | |
|---|---|---|---|---|
| | CB (%pds) | SB (%) | HDS (%) | HDN(%) |
| NiMo3 | 50,9 | 79,8 | 98,9 | 97,1 |
| NbNiMo3Si | 52,9 | 79,4 | 99,0 | 97,3 |
| NbNiMo3BSi | 55,5 | 79,3 | 99,5 | 98,9 |
| NbNiMo3PBSi | 55,7 | 79,2 | 99,45 | 98,9 |

Les résultats du tableau 3 montrent que les performances des catalyseurs NiMo3 sont grandement améliorées lorsqu'ils contiennent du niobium et un promoteur. On note en particulier une amélioration de la conversion brute tout en gardant un niveau de sélectivité en distillats moyens constant.

Les catalyseurs contenant une zéolithe non globalement désaluminée et un élément du groupe VB et un élément promoteur sont donc particulièrement intéressants pour l'hydrocraquage partiel de charge de type distillats sous vide contenant de l'azote à une pression d'hydrogène modérée.

Exemple 5 :

Comparaison des catalyseurs en hydrocraquage d'un gazole sous vide à pression plus élevée

Les catalyseurs dont les préparations sont décrites dans les exemples 3 et 4 précédents sont utilisés dans les conditions de l'hydrocraquage à pression élevée (12 MPa) sur une charge pétrolière dont les principales caractéristiques sont les suivantes :

| | |
|---|---|
| Densité (20/4) | 0,919 |
| Soufre (% poids) | 2,46 |
| Azote (ppm poids) | 930 |
| Distillation simulée | |
| point initial | 277°C |
| point 10 % | 381°C |
| point 50 % | 482°C |
| point 90 % | 531°C |
| point final | 545°C |
| point d'écoulement | + 39°C |

L'unité de test catalytique comprend deux réacteurs en lit fixe, à circulation ascendante de la charge ("up-flow"). Dans chacun des réacteurs, on introduit 40ml de catalyseur. Dans le premier réacteur, celui dans lequel la charge passe en premier, on introduit le catalyseur de première étape d'hydrotraitement HR360 vendu par la société Procatalyse comprenant un élément du groupe VI et un élément du groupe VIII déposés sur alumine. Dans le second réacteur, celui dans lequel la charge passe en dernier, on introduit le catalyseur de deuxième étape c'est-à-dire le catalyseur d'hydroconversion (série NiMo5). Les deux catalyseurs subissent une étape de sulfuration in-situ avant réaction. Une fois la sulfuration réalisée, la charge décrite ci-dessus peut être transformée. La pression totale est de 12 MPa, le débit d'hydrogène est de 1000 litres d'hydrogène gazeux par litre de charge injectée, la vitesse volumique horaire est de 0,9h$^{-1}$.

Les performances catalytiques sont exprimées par la température qui permet d'atteindre un niveau de conversion brute de 70 % et par la sélectivité brute en distillats moyen (coupe 150°C-380°C). Ces performances catalytiques sont mesurées sur le catalyseur après qu'une période de stabilisation, généralement au moins 48 heures, ait été respectée.

La conversion brute CB est prise égale à :

$$CB = \% \text{ pds de } 380^{\text{moins}} \text{ de l'effluent}$$

La sélectivité brute SB est prise égale à :

$$SB = 100 * \text{poids de la fraction } (150°C\text{-}380°C)/\text{poids de la fraction } 380^{\text{moins}} \text{ de l'effluent}$$

La température de réaction est fixée de façon à atteindre une conversion brute CB égale à 70% poids. Dans le tableau 4 suivant, nous avons reporté la température de réaction et la sélectivité brute pour les catalyseurs de la série NiMo5.

Tableau 4 :

| Activités catalytiques des catalyseurs NiMo5 en hydrocraquage | | |
|---|---|---|
| | T (°C) | SB (%) |
| NiMo5 | 396 | 71 |
| NiMo5P | 395 | 71.4 |
| NbNiMo5P | 392 | 71.3 |

La présence d'un élement du groupe VB, ici le niobium, et d'un promoteur dans le catalyseur contenant la zéolithe non globalement désaluminée permet de conserver la sélectivité très élevée du catalyseur NiMo5 tout en ayant une température de réaction plus basse puisqu'un gain de température de 4°C est observé.

Les catalyseurs de l'invention, contenant une zéolithe non globalement désaluminée un élément du groupe VB, et un promoteur sont donc particulièrement intéressants pour l'hydrocraquage de charge de type distillats sous vide contenant de l'azote à une pression d'hydrogène modérée et élevée.

**Revendications**

1. Catalyseur comprenant au moins une matrice amorphe ou mal cristallisée de type oxyde, au moins un élément du groupe VB, au moins une zéolithe Y , non globalement désaluminée, dont le paramètre de maille est supérieur à 2,438 nm, et le rapport SiO2/Al2O3 global est inférieur à 8, et au moins un élément promoteur choisi dans le groupe constitué par le bore, le phosphore, et le silicium.

2. Catalyseur selon la revendication 1 dans lequel la zéolithe Y présente un rapport molaire $SiO_2/Al_2O_3$ de charpente supérieur ou égal au rapport molaire $SiO_2/Al_2O_3$ global et inférieur à environ 21.

3. Catalyseur selon l'une des revendications 1 ou 2 dans lequel l'élément du groupe VB est le niobium.

4. Catalyseur selon l'une des revendications 1 à 3 comprenant en outre au moins un élément choisi parmi les éléments du groupe VIB et du groupe VIII.

**5.** Catalyseur selon la revendication 4 dans lequel l'élément du groupe VIB est le molybdène ou le tungstène et l'élément du groupe VIII est le fer, le cobalt ou le nickel.

**6.** Catalyseur selon l'une des revendication 1 à 5 comprenant en outre au moins un élément choisi dans le groupe VIIA.

**7.** Catalyseur selon l'une des revendications 1 à 6 renfermant en % poids par rapport à la masse totale du catalyseur :

- 0,1 à 99,8% d'au moins une zéolithe Y non globalement désaluminée.
- 0,1 à 60% d'au moins un élément choisi dans le groupe VB,
- 0,1 à 99% d'au moins une matrice minérale poreuse amorphe ou mal cristallisée de type oxyde
- de 0,1 à 20% d'au moins un élément promoteur choisi dans le groupe constitué par le bore, le phosphore, et le silicium, non compris le silicium éventuellement contenu dans la zéolithe,

le catalyseur pouvant renfermer en outre :

- de 0 à 60% d'au moins un élément choisi parmi les éléments du groupe VIB et du groupe VIII, et
- de 0 à 20% d'au moins un élément choisi dans le groupe VIIA, de préférence le fluor.

**8.** Procédé de préparation d'un catalyseur selon l'une des revendications 1 à 7 dans lequel :

a) on sèche et on pèse un solide dénommé le précurseur, renfermant au moins les composés suivants : au moins une matrice, au moins une zéolithe Y, non globalement désaluminée, éventuellement au moins un élément promoteur choisi dans le groupe constitué par le bore, le phosphore, et le silicium, éventuellement au moins un élément choisi parmi les éléments du groupe VIB et du groupe VIII, éventuellement au moins un élément du groupe VIIA, le tout étant de préférence mis en forme,

b) le solide sec obtenu à l'étape a) est calciné à une température d'au moins 150°C.

c) on imprègne le solide précurseur défini à l'étape b), par une solution contenant au moins un élément du groupe VB, de préférence le niobium,

d) on laisse reposer le solide humide sous une atmosphère humide à une température comprise entre 10 et 120°C,

e) on sèche le solide humide obtenu à l'étape d) à une température comprise entre 60 et 150°C,

f) on calcine le solide séché à l'étape e) sous air sec à une température d'au moins 150°C, de préférence au moins environ 250°C.

**9.** Procédé de préparation d'un catalyseur selon la revendication 8 dans lequel au moins une calcination est effectuée à l'issue de l'une quelconque des étapes de la préparation, à une température d'au moins 150°C.

**10.** Procédé de préparation selon l'une des revendications 8 ou 9 dans lequel on procède à la sulfuration du catalyseur sous flux d'un mélange hydrogène/hydrogène sulfuré ou encore sous hydrogène sulfuré pur, à une température comprise entre 150 et 800°C.

**11.** Utilisation du catalyseur selon l'une des revendications 1 à 7 ou préparé selon l'une des revendications 8 à 10 dans un procédé d'hydrocraquage de charges hydrocarbonées.

**12.** Utilisation selon la revendication 11 dans laquelle la température est supérieure à 200°C, la pression supérieure à 0,1 MPa, la quantité d'hydrogène au minimum de 50 litres d'hydrogène par litre de charge, et la vitesse volumétrique horaire comprise entre 0,1 et 20 volume de charge par volume de catalyseur et par heure.

**13.** Utilisation selon la revendication 11 dans un procédé d'hydrocraquage doux dans laquelle le niveau de conversion est inférieur à 55%, la température est supérieure à 230°C, la pression supérieure à 2 MPa et inférieure à 12MPa, la quantité d'hydrogène au minimum de 100 litres d'hydrogène par litre de charge, et la vitesse volumétrique horaire comprise entre 0,15 et 10 volume de charge par volume de catalyseur et par heure.

14. Utilisation selon la revendication 11 dans un procédé d'hydrocraquage, dans laquelle la conversion est supérieure à 55%, la température est supérieure à 230°C, la pression supérieure à 5 MPa, la quantité d'hydrogène au minimum de 100 litres d'hydrogène par litre de charge, et la vitesse volumétrique horaire comprise entre 0,15 et 10 volume de charge par volume de catalyseur et par heure.

15. Utilisation selon l'une des revendications 11 à 14 dans laquelle une étape d'hydrotraitement est effectuée, à une température comprise entre 350°C et 460°C, une pression d'au moins 2 MPa, avec une quantité d'hydrogène d'au moins 100 litres d'hydrogène par litre de charge, une vitesse volumétrique horaire comprise entre 0,1 et 5 volume de charge par volume de catalyseur et par heure, et préalablement à l'étape d'hydrocraquage.

Office européen
des brevets

**RAPPORT DE RECHERCHE EUROPEENNE**

Numéro de la demande

EP 99 40 1513

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 4 801 567 A (MOOREHEAD ERIC L) 31 janvier 1989 (1989-01-31) * revendications 1,10,20 * * exemple VI * | 1,2,7 | B01J29/16 C10G47/20 |
| A | EP 0 178 723 A (CATALYSTS & CHEMICALS INDUSTRIES CO.) 23 avril 1986 (1986-04-23) * revendication 1 * * page 6, ligne 10 - ligne 15 * * exemple 2 * * tableau 1 * | 1-3,7-9 | |
| A | DATABASE WPI Section Ch, Week 9040 Derwent Publications Ltd., London, GB; Class H04, AN 90-302274 XP002093202 & JP 02 214544 A (NIPPON OIL KK), 27 août 1990 (1990-08-27) * abrégé * | 1-5,7, 11-15 | |
| A | US 4 777 157 A (KOEPKE JEFFERY W ET AL) 11 octobre 1988 (1988-10-11) * revendications 1-7,15-18,20-22,26,28 * * colonne 7, ligne 66 - colonne 8, ligne 9 * * exemple * * tableau III * | 1-5,7, 11-15 | DOMAINES TECHNIQUES RECHERCHES (Int.Cl.6)  B01J C10G |
| A | US 5 620 590 A (ABSIL ROBERT P L ET AL) 15 avril 1997 (1997-04-15) | | |

Le présent rapport a été établi pour toutes les revendications

| Lieu de la recherche | Date d'achèvement de la recherche | Examinateur |
|---|---|---|
| LA HAYE | 17 septembre 1999 | Zuurdeeg, B |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**  EP 99 40 1513

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

17-09-1999

| Document brevet cité au rapport de recherche | | Date de publication | Membre(s) de la famille de brevet(s) | | Date de publication |
|---|---|---|---|---|---|
| US 4801567 | A | 31-01-1989 | US | 4388221 A | 14-06-1983 |
| | | | US | 4454245 A | 12-06-1984 |
| | | | US | 4604371 A | 05-08-1986 |
| | | | US | 4639530 A | 27-01-1987 |
| | | | US | 4481363 A | 06-11-1984 |
| | | | US | 4599477 A | 08-07-1986 |
| | | | US | 4455388 A | 19-06-1984 |
| | | | US | 4562269 A | 31-12-1985 |
| | | | US | 4555584 A | 26-11-1985 |
| | | | US | 4567314 A | 28-01-1986 |
| | | | US | 4564603 A | 14-01-1986 |
| EP 0178723 | A | 23-04-1986 | JP | 61090743 A | 08-05-1986 |
| JP 2214544 | A | 27-08-1990 | AUCUN | | |
| US 4777157 | A | 11-10-1988 | US | 4871445 A | 03-10-1989 |
| US 5620590 | A | 15-04-1997 | US | 5401704 A | 28-03-1995 |

EPO FORM P0460

Pour tout renseignement concernant cette annexe : voir Journal Officiel de l'Office européen des brevets, No.12/82